(19) Europäisches Patentamt
European Patent Office
Office européen des brevets

(11) **EP 3 156 827 A1**

(12) **EUROPEAN PATENT APPLICATION**

(43) Date of publication:
**19.04.2017 Bulletin 2017/16**

(51) Int Cl.:
***G01V 3/08*** *(2006.01)*

(21) Application number: **15189977.0**

(22) Date of filing: **15.10.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **ORG GEO AS
4070 Randaberg (NO)**

(72) Inventors:
• **Flekkøy, Eirik Grude
N-1450 Nesoddtangen (NO)**

• **Håland, Endre Berntsen
N-4520 Lindesnes (NO)**
• **Springer, Martin
N-7011 Tronndheim (NO)**
• **Drivenes, Geir R.
N-4352 Kleppe (NO)**
• **Kjerstad, Jostein K.
N-4023 Stavanger (NO)**

(74) Representative: **Onsagers AS
P.O. Box 1813 Vika
0123 Oslo (NO)**

(54) **METHOD AND APPARATUS FOR MARINE ELECTRICAL EXPLORATION**

(57)    A method and apparatus for offshore electromagnetic surveying for the purpose of hydrocarbon exploration and detection is described. The method comprises the step of A) measuring a measurement vector **u** between receiver electrodes, where the measurement vector **u** comprises a plurality of measurement signals $u_i$ being dependent on a geological characteristic $m_k$ at an geological parameter index $k$ providing information about the geological structure of the geological target area.

The method is further characterized in that it also comprises the following steps: B) calculating a transformed vector **v** as a function of the measurement vector **u,** where said transformed vector **v** is designed to optimize the sensitivity to changes in the geological characteristic $m_k$ and C) performing, for each time $t$, at least one of minimizing uncertainty $\delta v(k,t)$ of the transformed vector **v** with respect to the geological characteristic $m_k$, where said uncertainty $\delta v(k,t)$ comprises a non-systematic uncertainty $\delta'(k,t)$ and a systematic uncertainty $\Delta_{wd}v(k,t)$, maximizing a target response $\partial v(k,t)/\partial m_k$ of the transformed vector **v** with respect to the geological characteristic $m_k$ and minimizing a ratio $\psi(k,t)$ between at least the square of the non-systematic uncertainty $<\delta v'(kt)^2>$ of the transformed vector **v** and the square of the target response $(\partial v(k,t)/\partial m_k)^2$ of the transformed vector **v** with respect to the geological characteristic $m_k$.

FIG. 1

## Description

**Technical Field:**

The present invention relates to a method and apparatus for marine electrical exploration as defined in the introductory part of the independent claims.

**Background and prior art:**

The main characteristics of the method are that it identifies hydrocarbon deposits through the way they alter the geochemistry and electrical response of the overburden. Due to the flexibility of the multipole nature of the transmitters and receivers, the main advantages of the method are that it

> 1. Optimizes contrasts in measured data caused by the presence of hydrocarbons by adjusting the combination of measured voltage differences and other data.

> 2. Minimizes equivalence in the data-inversion between geo-electrical parameters. This is done both by means of data processing and adjustment of the transmitter and receiver characteristics.

The basis for the technology is the observation that no caprock over any reservoir is entirely impermeable. Consequently, some micro-seepage will exist, causing mineralogical changes in the overburden, i.e. at much shallower depths than the reservoir itself. This means that a reasonably light and mobile system may be employed to detect the electrical response to such changes, which will include pyrite formation, giving rise to Induced Polarization (IP) responses, magnetite or maghemite, which will give rise to contrasts in magnetizability, and direct changes in sea-bottom chemistry, in particular the presence of various hydrocarbons. Also the changes in mineralogy will cause stationary currents surrounding the reservoir volume.

*Electic fields from controlled source*

The basis for the modelling is given in the following. When Ohms law becomes history dependent the diffusion equation too takes a history dependent form. By taking the Fourier time-transform of Maxwells equation $\nabla \times B = \mu_0$ (j + $\varepsilon_0$ $\partial E/\partial t$), dropping the displacement current $\varepsilon_0$ $\partial E/\partial t$ as usual, the diffusion equation is generalized to

$$i\omega \mathbf{j}(\mathbf{x}, \omega) = D(\omega)(\nabla^2 \mathbf{j}(\mathbf{x}, \omega) + \nabla \times \nabla \times \mathbf{j}^e(\mathbf{x}, \omega)) \qquad (1)$$

where $\mathbf{j}_e$ is the source current and the electric field that we measure is given by

$$\mathbf{E}(\omega) = \frac{\mathbf{j}(\omega)}{\sigma(\omega)} \qquad (2)$$

In the above

$$D(\omega) = \frac{1}{\mu\sigma(\omega)} \qquad (3)$$

In the time domain,

$$\frac{\partial \mathbf{j}}{\partial t} = \int_{-\infty}^{t} dt' D(t - t')(\nabla^2 \mathbf{j}(\mathbf{x}, t') + \nabla \times \nabla \times \mathbf{j}^e(\mathbf{x}, t')) \qquad (4)$$

The conductivity is represented by the Cole-Cole [1] relation and has the form

$$\sigma(\omega) = \sigma_\infty \left(1 - \frac{\eta}{1 + (i\omega\tau)^c}\right) \quad (5)$$

The solution of the above equations may be done by standard procedures, either using a 1D, 2D or 3D model of the earth, and provides the basis for inversion using the novel techniques of the present invention, as will be explained below. This will give the resistivity and the chargeability $\eta(x)$ as a result,

*Magnetic background field deviations*

As noted in studies dating back to the sixties, see [8] for a brief review, the reducing- or other mineralogical effects above a reservoir causes anomalies in the magnetic susceptibility. In the comprehensive study of [8] the mineral that was largely responsible for the anomalies was maghemite. The magnitude of the anomalies measured directly in drill cuttings is of the order

$$\chi \sim (1 - 2)\, 10^{-4} \quad (6)$$

where the dimensionless susceptibility is given via the magnetization, or magnetic moment per unit volume $\mathbf{m} = \chi\mathbf{B}$. Writing the magnetic field in terms of the stationary background field $\mathbf{B}_0$ and a vector potential as

$$\mathbf{B} = \nabla \times \mathbf{A} + \mathbf{B}_0, \quad (7)$$

the above Maxwell equation takes the form

$$\nabla \times (\nabla \times \mathbf{A} - \mathbf{m}) = \mu_0 \mathbf{j} = 0, \quad (8)$$

where we have used the assumption that there are no free currents, or, in other words, that any sources have been switched off sufficiently long. Choosing the Coulomb gauge condition $\nabla \cdot A = 0$, which we are always free to do, we get the Poisson equation

$$-\nabla^2 \mathbf{A} = \nabla \times \mathbf{m}, \quad (9)$$

or, since $m = \chi B \approx \chi B_0$,

$$\nabla^2 \mathbf{A} = \mathbf{B}_0 \times \nabla\chi. \quad (10)$$

Using the Green function for the Laplace operator, that satisfies

$$\nabla^2 G(\mathbf{r}) = \delta^3(\mathbf{r}) \quad (11)$$

we can write the solution for the Poisson equation

$$\mathbf{A} = \int d^3r'\, G(\mathbf{r} - \mathbf{r}')\, \mathbf{B}_0 \times \nabla'\chi(\mathbf{r}'). \quad (12)$$

This allows us to model the magnetic field using standard formulae for the perturbations caused by 3D variations in the earth.

*Static potential measurements*

It is well known that around and above a hydrocarbon reservoir the mineralogical and chemical changes will give rise to gradients in the electrochemical potential on the same scale as the reservoir itself. The induced potential differences caused by the gradients will give rise to static electric fields that may be recorded by the same equipment that is used to record the responses to any transmitted electric field from the controlled sources. These static electric fields may be modelled very much like the static *B*-field changes and applied, along with other techniques, to detect reservoir edges or prospect boundaries.

*Prior Art*

Conrad Schlumberger [9] investigated the IP effect (IP = induced polarization) for electrical surveying and observed that small offset distance and large delay time are favoring the IP/EM signal ratio (EM = electromagnetic). Early methods to measure IP-effects include geo-electric prospecting methods used to determine rock polarizability. These methods applied the time and the frequency domain. For time-domain applications, see [4]. The FS-IP method in [5] exemplifies frequency domain applications.

Differential measurements, where differences of potential differences $\Delta U_1 - \Delta U_2$ are calculated to estimate field gradients, are well known as input to IP inversion algorithms, see [7] and [2] and references therein. Such geophysical techniques are therefore established and free technologies.

In a recent patent application [6], IP-measurements are proposed using electric fields resulting from a bipole source. The measured fields are normalized by their initial values, and these normalized parameters are then combined in various parameters for inversion.

There is however a need to enhance the sensitivity/contrast of the geological target. Such enhancement may be obtained by improving the analysis, or data processing. Alternatively, the enhanced sensitivity of the measured data to a given geological target may be obtained by optimizing the transmitter currents and/or the transmitter electrode configuration.

**Summary of the invention:**

The present invention is set forth and characterized in the main claims, while the dependent claims describe other characteristics of the invention.

In particular, the invention concerns a method suitable for measuring and analyzing measurement data from an electromagnetic survey of a geological target area that potentially contains a hydrocarbon reservoir. The method comprises the step of

A) measuring a measurement vector $u$ between at least two receiver electrodes, said measurement vector $u$ comprising a plurality of measurement signals $u_i$. The receiver electrodes may be situated along at least one towing cable used in the electromagnetic survey, for example behind a vessel. However, the receiver electrodes may also be arranged on other objects such as underneath a floating board. $i$ is an integer that may index position and/or time during the survey and has a range between 1 and N, where N equals the total number of measurement points. At least one of the plurality of measurement signals $u_i$ is dependent on a geological characteristic $m_k$. Said geological characteristic $m_k$ provides information about the geological structure of the geological target area and may for example be an electrical property of the geology such as electrical resistivity $p$, chargeability $\eta$, Cole-Cole exponent c, or any combination thereof. $m_k$ may also be a chemical property such as a concentration of a chemical substance $C_i$. $k$ is an geological parameter index keeping track on the various geological characteristics $\{m_k\}$, if more than one are of interest in the survey.

The method is further characterized in that it comprises the additional steps of:

B) calculating a transformed vector $v$ as a function of the measurement vector $\boldsymbol{u}$, where said transformed vector $v$ is designed to optimize the sensitivity to changes in the at least one geological characteristic $m_k$ and

C) performing, for each time $t$, at least one of

- minimizing uncertainty $\delta v(k,t)$ of the transformed vector $v$ with respect to the geological characteristic $m_k$, where said uncertainty $\delta v(k,t)$ comprises a non-systematic uncertainty $\delta v'(k,t)$ and a systematic uncertainty $\Delta_{wd} v(k,t)$,
- maximizing a target response $\partial v(k,t)/\partial m_k$ of the transformed vector $v$ with respect to the geological characteristic $m_k$ and
- minimizing a ratio $\psi(k,t)$ between at least the square of the non-systematic uncertainty $<\delta v'(k,t)^2>$ of the transformed vector v and the square of the target response $(\partial v(k,t)/\partial m_k)^2$ of the transformed vector $v$ with respect to the geological characteristic $m_k$, that is minimizing:

$$\psi(k,t) = \frac{\langle \delta v'(k,t)^2 \rangle}{(\partial v(k,t)/\partial m_k)^2}. \qquad (13)$$

As an alternative or addition to the latter step one may add square of the the systematic uncertainty $\Delta_{wd} v(k,t)$ to the square of the non-systematic uncertainty $\delta v(k,t)$ prior to completing the minimizing step of ratio $\psi(k,t)$, that is minimizing:

$$\psi(k,t) = \frac{\langle \delta v'(k,t)^2 \rangle + (\Delta_{wd} v(k,t))^2}{(\partial v(k,t)/\partial m_k)^2} \qquad (14)$$

Systematic uncertainty $\Delta_{wd} v(k,t)$ may for example include uncertainties in water depth variations

Note that the measurement signals $u_i$ might have been subjected to one or more processing steps prior to step B, for example in order to reduce unwanted drift and other noise contributions. In that case the measurement positions $i$ may be in the form of a plurality of spatial bins $N_B$, where each bin represent an average over a plurality of discrete positions. With $N_T$ different discrete time values or *bins t*, one obtain a total number of measurement points $N = N_B N_T$. Hereinafter time $t$ may represent either a continuous time $t$ or a discrete time *bin t*, depending on whether or not the above mentioned processing steps have been carried out.

In an advantageous embodiment the step of minimizing the uncertainty $\delta v(k,t)$ of the transformed vector $v$ with respect to the at least one geological characteristic $m_k$ is performed using an equation defined as

$$\langle \delta v(k,t) \rangle = \sqrt{(\langle \delta v'(k,t)^2 \rangle + (\Delta_{wd} v(k,t))^2} =$$
$$\sqrt{\frac{1}{N_B} \sum_{i=1}^{N_B} \left( v^i(k,t) - \bar{v}(k,t) \right)^2 + \left( v(k,h+\Delta h,t) - v(k,h,t) \right)^2} \qquad (15)$$

where $N_B$ is the number of spatial bins along a measurement line, which spatial bin size corresponds to the geological scale of interest, $i$ is an integer number indexing each spatial bin, $v^i(k,t)$ is the value of the transformed vector $v$ at spatial bin $i$, index $k$ and time $t$, $\overline{v(k,t)}$ is an average over consecutive sequences (stacked average) of the response at *index k* and *time t*, $h$ is a parameter that generates a systematic error in the transformed vector v, and $v(k,h,t)$ and $v(k,h+\Delta h,t)$ are calculated components of the transformed vector $v$ for the systematic errors $h$ and $h + \Delta h$, respectively, at a geological parameter *index k* and a time $t$. Note that the systematic error may be zero, or not significant. A typical size of a spatial bin may lie in the range 0.5-10 kilometers, for example 1 kilometer.

In another advantageous embodiment the step of maximizing the target response $\partial v(k,t)/\partial m_k$ of the transformed vector $v$ with respect to the geological characteristic $m_k$ is performed using an equation defined as

$$\frac{\partial v(k,t)}{\partial m_k} \approx \frac{v(k,m_k+\Delta m_k,t) - v(k,m_k,t)}{\Delta m_k} \qquad (16)$$

where $\Delta m_k$ is an increment of the geological characteristic $m_k$ and $v(k,m_k,t)$ and $v(k, m_k + \Delta m_k, t)$ are calculated components of the transformed vector $v$ for the geological characteristics $m_k$ and $m_k + \Delta m_k$, respectively, at a given geological parameter *index k* and a time or time bin $t$.

In another advantageous embodiment each component $v(k,t)$ of the transformed vector $v$ at a geological parameter *index k* and a time $t$ is calculated by projecting the measurement vector $\boldsymbol{u}$ in the direction given by a unit vector $\mathbf{e}(k,t)$, that is, performing the operation $v(k,t) = \mathbf{e}(k,t) u(t)$. The unit vector e(k,t) is governed by the geological characteristic $m_k$ and may vary in time. Hence, the minimizing and/or maximizing operations mentioned above could in this particular embodiment be an optimization with respect of $\mathbf{e}(k,t)$.

In another advantageous embodiment step C is carried out for a plurality of $k$ values corresponding to a plurality of geological characteristics $\{m_k\}$, thereby enabling a subsequent identification of at least one direction of the transformed vector $v$ that optimize sensitivity for a corresponding geological characteristic $m_k$.

In another advantageous embodiment the method further comprises the step of minimizing an objective function defined as

$$\phi = \sum_{k=1}^{N''} \left( \sum_t \frac{\left(v^d(k,t) - v^m(k,t)\right)^2}{(\delta v(k,t))^2} \right) \quad (17)$$

for example by using the well-known Levenberg-Marquart algorithm. In the equation 17 $N''$ is the total number of geological characteristics $\{m_k\}$ corresponding to said plurality of $k$ values, $v^d(k,t)$ is a value of the transformed vector $v$ corresponding to the measurement signal $u_i$ at geological parameter *index k* and *time t*, $v^m(k,t)$ is a calculated value of the transformed vector $v$ based on a geological characteristic $m_k$ corresponding to a predetermined model. This minimizing algorithm may provide the optimal direction of the unit vector **e***(k,t).*

In another advantageous embodiment the method further comprises the step of measuring locations of said receiver electrodes, which, as mentioned above, may be situated along at least one towing cable. The step A and the step of measuring locations of said receiver electrodes are preferably performed simultaneously, or near simultaneously.

In another advantageous embodiment at least one of measurement signals $u_i$ is a potential difference. Alternatively, or in addition, to the potential difference, one or more of measurement signals $u_i$ may be an electrical field, a magnetic field or a static electrical potential.

In another advantageous embodiment at least one of the geological characteristic $m_k$ comprises a geochemical parameter such as hydrocarbon concentration in seabottom sample. Such geochemical parameter(s) may be in combination with the above mentioned geo-electric characteristic(s).

The invention also concerns an apparatus suitable for measuring and analyzing electromagnetic data over a geological target area that potentially contains a hydrocarbon reservoir. The apparatus comprises at least two receiver electrodes suitable for recording measurement signals ui from the geological target area and a computer program product stored on a computer usable medium comprising computer readable program means to control an execution of the method in accordance with any one of the above mentioned method steps and in any combinations. At least some of the plurality of receiver electrodes may be configured to measure at least one of a magnetic background field and a static electrical potential in order to complete step A) of the method.

In an advantageous embodiment the apparatus further comprises a towing system comprising a plurality of towing cables, where at least one towing cable comprises said at least two receiver electrodes and at least one towing cable comprises a plurality of transmitter (TX) electrodes, preferably at least three (TX) electrodes, wherein the transmitter (TX) electrodes are configured to broadcast electromagnetic signals to the geological target, preferably in the form of a plurality of current pulses with finite durations. Examples of current pulses with finite durations are pulses with rectangular or near rectangular waveforms, or any other waveforms with sharp/abrupt onsets and ends. For the finite pulse embodiment the at least one receiver electrode pair is further configured to record the measurement signals $u_i$, at points in time between the transmitted plurality of current pulses. That is, the recordings are carried out during the pause between the current pulses. The waveforms are herein defined as having 'sharp /abrupt onsets / ends' term ' if the onset and shut-off times are much shorter than the transmission and recording times for each pulse period. For example, a time duration of a raise or decrease in current from below 10 % to above 80 % of the maximum current within a pulse of less than 10 % of the pulse' full width at half maximum (FWHM) may be considered sharp / abrupt. The pause between the pulses is defined as the period of the pulse train where the current is less than 10 % of the maximum current within a pulse.

In another advantageous embodiment the position of the plurality of transmitter (TX) electrodes and/or the transmitted current pulses from the plurality of transmitter (TX) electrodes is, by use of the above mentioned computer program product, adjusted iteratively during the recording of the measurement signals $u_i$ in order to optimize sensitivity to at least one geological characteristic $m_k$ of a given geological target. Such an iterative adjustment may be carried out by forward calculations. The relative contrast relating to the introduction of a geological change (as for instance the introduction of a chargeable layer) is in this embodiment calculated using different configurations of transmitter (TX) currents and/or spatial distribution configurations of the plurality of transmitter electrodes. This is itself a well defined optimization problem that is solved either by a linear search in the space of parameters that specify the towing cables and the transmitter electrodes, or by established inversion algorithms or a combination thereof. The particular embodiment seeks to optimize the transmitter current combinations and can be done in addition to the subsequent analysis (step B and C) of the method.

In another advantageous embodiment the at least one towing cable including the at least one receiver electrode comprises at least one of magnetometers suitable for measuring magnetic field, pressure sensors suitable for measuring pressure, transponders suitable for localizing the transmitter (TX) electrodes relative to a towing vessel, accelerometers suitable for measuring acceleration and gyroscopes suitable for measuring orientation. At least one of the above mentioned components may also be connected to at least one towing cable comprising the at least two transmitter electrode, for example the at least one accelerometer and/or the at least one gyroscope.

In another advantageous embodiment the apparatus further comprises a fiberoptic cable, for example attached to the at least one towing cable comprising the at least one receiver electrode. The fiberoptic cable is configured to enable monitoring of cable displacements between the plurality of towing cables during use.

In all of the above mentioned embodiments the measurement signals $u_i$ may be induced in the geological target area by generating at least one electric field from at least one controllable electric field source within the transmitter system prior to step A).

As an alternative to use of towing cables, the at least two receiver electrodes of the apparatus may be arranged on any other object, preferably a buoyant object which enables the receiving electrodes to detect measurement values $u_i$ during drift or propulsion of the buoyant object on water. An example of an object is a buoyant board, a vessel or a buoy. An example of relevant measurement values $u_i$ is static potential.

The above mentioned method and apparatus exploits the possibility of optimizing the contrast in the measured data for presence of hydrocarbons by finding the parameters that shows the highest sensitivity to geological characteristics $\{m_k\}$. Another aim of the present invention is to exploit the possibility of optimizing transmitter current combinations and transmitter electrode spatial distribution. The technology is designed to be sensitive to anomalies of induced polarization, quantified by such quantities as the chargeability, etc, while at the same time recording changes in the magnetic background field and/or electrostatic potentials.

In the following description, specific details are introduced to provide a thorough understanding of embodiments of the method and a marine electrical exploration system. One skilled in the relevant art, however, will recognize that these embodiments can be practiced without one or more of the specific details, or with other components, systems, etc. In other instances, well-known structures or operations are not shown, or are not described in detail, to avoid obscuring aspects of the disclosed embodiments.

**Brief description of the drawing:**

Fig. 1 is a conceptual illustration of the towed system, showing $N$ transmitter electrodes and $M$ receiver electrodes attached to separate towing cables, where $\Delta u_i$ is the voltage difference between electrodes 1 and 2,

fig. 2 is an one-dimensional geo-electric model and its associated geo-electrical parameters of a layered rock strata situated under a body of water and

fig. 3 (a) and (b) show graphs of the initial potential difference parameter $u_i$ (a) and the transformed parameter $v_5$ as function of position along survey lines.

**Detailed description of the invention**

*Transmission and recording system*

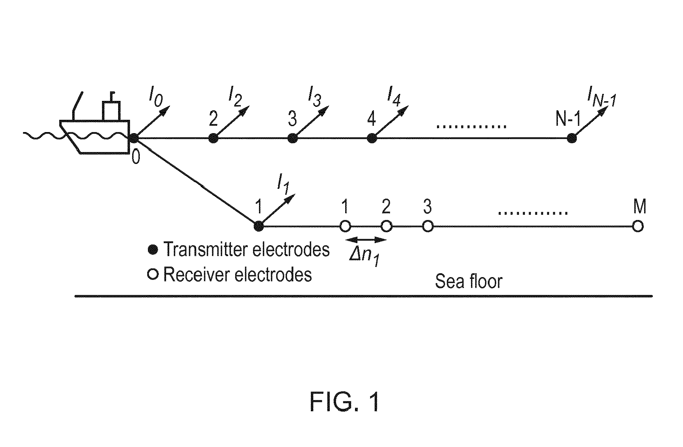

The principal layout of transmission and recording system of the present invention is illustrated in figure 1, showing towing cables with transmitter electrodes ($i$ = 0 ... $N$-1) and receiver electrodes (i = 1...$M$). The currents flowing from the $i$ electrode into the water are imposed individually. I.e. the current imposed between electrode 0 and 1 is denoted $I_i$, the current from electrode 1 to electrode 2 $I_2$, the current from electrode 1 to electrode 3 $I_3$, etc. The total current is thus $I_{tot} = \Sigma_i I_i$. Apart from the electrodes this system may include magnetometers, pressure sensors and transponders (not shown).

Generally, inversion of EM data is an exercise in data-fitting where a so-called objective function, or difference function, is minimized with respect to the geo-electrical parameters of the earth. These parameters typically include resistivity, and the objective function measures the difference between the recorded data and the corresponding calculated values that results from Maxwells equations and the geo-electric parameters.

When measuring IP effects by means of inversion of EM data, there is generally a significant equivalence between the values of different geo-electric parameters, such as local resistivity and charge values. This problem may be significantly reduced by combining signals which give complementary information on the subsurface. In particular, during a survey the relative strengths of the currents will be varied in order to reduce equivalence.

*Data treatment by means of the Method of Optimized Parameters- MOPS*

The inventive method, hereinafter referred to as the Method of Optimized Parameters-MOPS, is based on the idea that a set of measurement data should be combined and weighted in a way that maximizes the sensitivity to the target geological structure and minimizes the noise.

Normally inversion of the measured data is carried out to obtain the geo-electrical parameters that describe the target geological structure. These parameters may be grouped in the vector $m_k$, where $k$ = 1, 2, ... $N$. As an example, if the model is one-dimensional and one is only looking of the vertical resistivity profiles, $\rho_i$, and the chargeability profiles, $\eta_i$, then the vector $\boldsymbol{m} = \{m_k\}$ will take the form

$$\boldsymbol{m} = \begin{bmatrix} \rho_1 \\ \rho_2 \\ \eta_2 \\ \rho_2 \\ \eta_3 \\ . \\ . \\ . \end{bmatrix}, \quad (18)$$

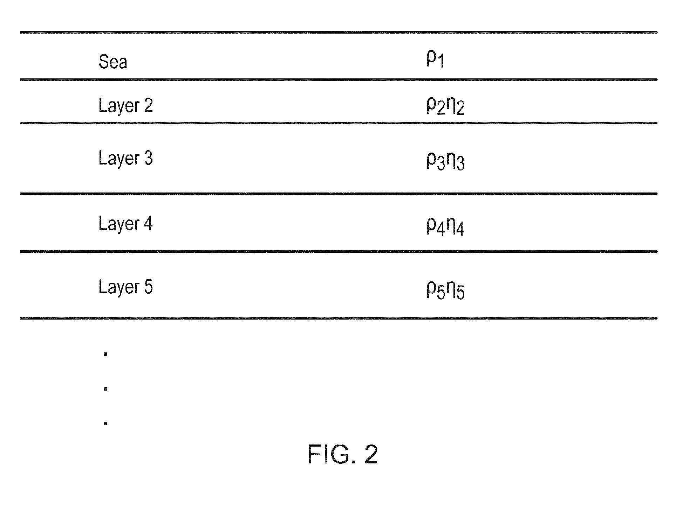

where the geo-electric parameters are indicated in figure 2, showing schematically a layered rock strata (layers 2-5) situated below sea (layer 1).

The inventive MOPS procedure is defined by identifying the data-parameters that are most sensitive to a given set of target geo-electric parameters $m_k$, distributed over the various layers as shown in figure 2.

In the context of hydrocarbon detection by means of electromagnetic responses to either a controlled source or a natural source (like the electromagnetic fields originating in the ionosphere, or generated by lighting storms), we start from a set of measurements that may include potential differences $u_{0i}$, magnetic background field $B_i$ and/or concentrations of chemical species $C_i$ taken from sea bottom samples. The index $i$ labels both times and locations / offsets from the source and may take the form $i = j + nN_T$, where $j = 0, ..., N_T - 1$ labels $N_T$ different discrete times (or frequencies, depending on whether the data is collected in the time- or frequency domain) and $n = 1, ..., N_0$ labels the different locations or offsets. If $N_T = 1$, then $i$ labels offset values only. By combining these variables into a vector

$$\boldsymbol{u} = \begin{bmatrix} u_0 \\ B \\ C \end{bmatrix}, \quad (19)$$

or simply $\boldsymbol{u} = u_0$ if we are only considering E-field-data.

The data in the $\boldsymbol{u}$ vector will have been subject to normal processing steps so as to reduce unwanted drift and other noise contributions. For concreteness, assume $\boldsymbol{u}$ is just the normal potential differences measured along a sequence of towed electrodes trailing behind a transmitter. These differences may be normalized by their initial values so as to become dimensionless numbers. The data processing may also include standard procedures such as binning, band-pass filtering and stacking. In the following we will assume that the data has been subjected to at least one of these standard procedures and averaged into $N_B$ spatial bins of size that match(es) the geological scales of interest (for instance, the signal may be averaged over 1 km blocks, see above), and positions $x_i$, which may be the distance from the start of a survey line, and discrete time bins of a size that corresponds to the desired resolution. The time then takes discrete values $t$. So the number of spatial bins along a data-line is $N_B$, and there are $N_T$ different time values in each response after binning.

We may define a new MOPS variable $v$ being a function of the $\boldsymbol{u}$ vector, where each of these MOPS variable $v(k,t)$ is designed to optimize the sensitivity to the particular geo-electric parameter $m_k$. For example, each MOPS variable $v(k,t)$ may be defined as

$$v(k,t) = \mathbf{e}(k,t) \cdot u(t) \quad (20)$$

which is the projection of the data-vector $\boldsymbol{u}$ in the direction given by the unit vector e(k,t) (which may vary in time). In the final inversion of the EM data, several $k$-values will be used. In order to optimize sensitivity we are actually optimizing the signal to noise ratio, and we thus need to estimate the noise contributions. Noise measurements are therefore carried out as part of the data processing.

The noise may be measured as variations around the local average values obtained at each bin position $x_i$. Then the deviation

$$\langle \delta v'(k,t)^2 \rangle = \frac{1}{N_B} \sum_{i=1}^{N_B} \left( v^i(k,t) - \bar{v}(k,t) \right)^2 \qquad (21)$$

where $i$ is a pulse number and $\overline{\upsilon}(k,t)$ is the stacked average of the response at time $t$. The result is a measure of the uncertainty in $v'(k,t)$. The above result may also be obtained by Fourier methods.

In addition to the above non-systematic uncertainty comes the uncertainty in $v(k,t)$ itself which is caused by various systematic contributions such as uncertainties in tow depths, bathymetry and unknown 3D structures (for example horizontal contrasts in conductivity). In order to represent these systematic uncertainties, which are all proportional to the strength of the transmitter current, we may add a contribution $\Delta_{wd} v(k,t)$ to the above non-systematic uncertainty. This contribution may as a first approximation be taken as $\Delta_{wd} v(k,t)$ oc $v(k,t)$. However, an even better estimate of the above-mentioned systematic uncertainty may be obtained by the equation

$$\Delta_{wd} v(k,t) = v(k, h + \Delta h, t) - v(k, h, t) \qquad (22)$$

where $h$ is a parameter that generates a systematic error, for example a water depth variation, and $v(k,h,t)$ is the calculated field parameter based on a given $h$-value. $\Delta h$ is the estimated uncertainty in $h$. The total uncertainty, i.e. from both non-systematic $\delta v(k,t))$ contributions and systematic $(\Delta_{wd} v(k,t))$ contributions, may thus be estimated by

$$\langle \delta v(k,t)^2 \rangle = \langle \delta v'(k,t)^2 \rangle + \left( \Delta_{wd}(k,t) \right)^2 \quad (23)$$

Finally, the last input to the MOPS procedure is the calculation of the target response $\partial v(k,t)/\partial m_k$, which may be calculated as a finite difference

$$\frac{\partial v(k,t)}{\partial m_k} \approx \frac{v(k,m_k+\Delta m_k, t) - v(k,m_k,t)}{\Delta m_k} \qquad (24)$$

where $v(k,m_k,t)$ is a forward calculation based on an initial assumption of a geological model giving an intial data set$\{m_k\}$, and $\Delta m_k$ is an increment of the particular $m_K$-value.

In a preferred embodiment of the invention, the MOPS procedure identifies the most sensitive data-parameter by minimizing the function

$$\psi(k,t) = \frac{\langle \delta v(k,t)^2 \rangle + \left( \Delta_{wd}(t) \right)^2}{(\partial v(k,t)/\partial m_k)^2} \quad (25)$$

or, if the systematic contribution $\Delta_{wd} v(k,t)$ of the uncertainty is ignored

$$\psi(k,t) = \frac{\langle \delta v(k,t)^2 \rangle}{(\partial v(k,t)/\partial m_k)^2} \qquad (26),$$

with respect to the projection $\mathbf{e}(k,t)$ (equation 20). This particular embodiment of the MOPS procedure singles out the direction in $u$-space that has an optimized signal-to-noise ratio.

*Case example focusing on chargeability over a known reservoir*

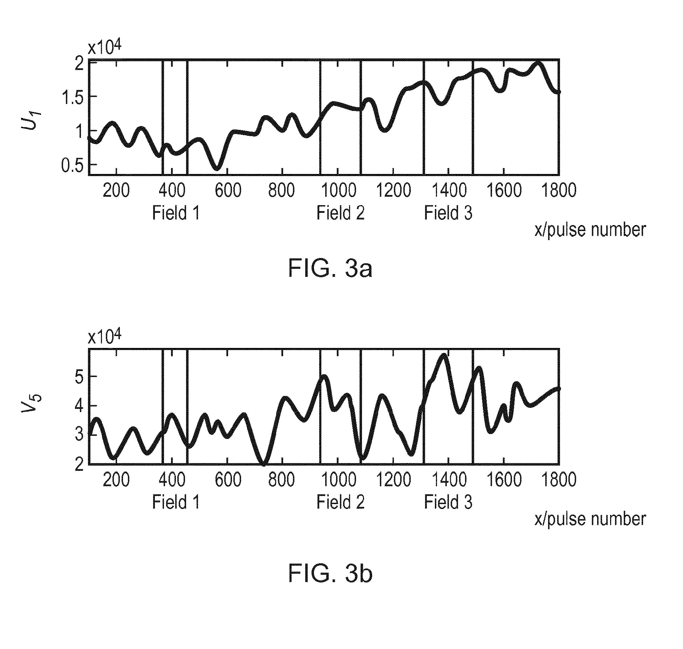

It is well known that $\eta$ anomalies (i.e. anomalies in chargeability within the geological structure) are correlated with underlying hydrocarbon reservoirs. In this example we optimize $\psi(k=5,t)$, which means focusing on the chargeability $\eta_3$. In this case $\eta_3$ represent the chargeability in a layer of 500 meters thickness located 200 meters below the sea bottom, and 1.5 - 2 kilometers above known hydrocarbon reservoirs. Figure 3 shows the result of the measurements, both of the original potential differences $u_1(t)$ and for the transformed variable $v(k=5,t)$, at a time $t$ about 1 second after a pulse shut-off. The locations of three known reservoirs (Field 1, Field 2 and Field 3) are indicated on the horizontal axis showing the positions along the survey lines. Normally, a full inversion with respect to $\eta_3$ would be required to see a correlation with the reservoir locations as these usually are not observable directly in the $u_i$ values. However, the maxima of the transformed variable $v(k=5,t)$ are seen to correlate well with the reservoir locations Field 1, Field 2 and Field 3. This implies that interpretation may be done directly in the processed data instead of, or in addition to, inversion (providing potentially ambiguous inversion results).

*Inversion with MOPS parameters*

The operation of projecting out a single direction in *u*-space discards the information along the orthogonal components. This may be corrected for by carrying out the optimization for several *k*-values, systematically identifying the directions that optimize sensitivity for the different $m_k$-values. Hence, the other directions in *u*-space will be represented.

The inversion is afterwards carried out by minimizing the objective function

$$\phi = \sum_{k=1}^{N''} \phi_k(t) \qquad (27)$$

where $N'' < N'$ and where the objective function $\phi_k$ at *k* includes the measured data $v^d(k,t)$

$$\phi_k = \sum_t \frac{\left(v^d(k,t) - v^m(k,t)\right)^2}{\langle \delta v(k,t)^2 \rangle} \qquad (28)$$

where $v^m(k,t)$ are the calculated values obtained from the model parameters *m*. The same minimization algorithm may be applied to obtain the most sensitive direction in *u*-space at incremental changes in $m_k$, thus giving the **e***(k,t)* vector (as in the actual inversion for the *m*-vector). In the above mentioned example (figure 3), which includes only **e***(k,t)*, the well known Levenberg-Marquart algorithm was used. Using $N = N_0$, the number of *e(k,t)* vectors is the same as the number of data-points. In other words, all the dimension of the data-space are accessed, except in the rare case where the set of *e(k,t)* vectors is linearly dependent.

Note that when $m_k$ is a parameter that has little impact on the data (for example a deep resistivity), it will have a corresponding weak effect in the objective function $\phi_k$. The same is the case for *t*-values where the sensitivity is small.

This method differs from the linear methods of synthetic steering [3] and principal component analysis, most notably by virtue of being entirely non-linear. Standard transformations of the $m_k$-values, such as $m \rightarrow \log(m)$, may be applied for numeral reasons in order to reduce the dynamic range of the variables that the method inverts for.

*Transmitter pulse optimization with the MOPS method*

The above steps are all steps that optimize the use and processing of acquired data. However, the MOPS parameters may also be used to optimize the pulse currents $I_i$'s during the progression of a survey. This may be done on the basis of on-board data inversion, since a preliminary geological model may be used to tune the currents $I_i$ so as to maximize $\psi_k$ of equation (25) or (26). This is done by the same, or nearly the same, minimization algorithms as the one that finds the optimal **e***(k,t)* directions and in the inversion process itself. Note that the recombination of currents allows a transition from a virtually vertical transmitter to a horizontal transmitter. Different targets *k* will favor different $I_i$ combinations. Hence, a possible outcome of the above described procedure is a survey having a number of separate current configurations.

In the preceding description, an aspect of the method and the apparatus according to the invention have been described with reference to an illustrative embodiment. For purposes of explanation, a method and apparatus were set forth in order to provide a thorough understanding of the invention and its workings. However, this description is not intended to be construed in a limiting sense. Various modifications and variations of the illustrative embodiment, as well as other embodiments of the method and apparatus, which are apparent to persons skilled in the art to which the disclosed subject matter pertains, are deemed to lie within the scope of the present invention.

**References:**

[1]:Cole, K. and R. Cole, 1941, Dispersion and absorption in dielectrics: J. Chem. Phys., 9, 341-351.

[2]: Davydycheva, S., S. N. Rykhlinkski, and P. Legeydo, 2006, Electrical prospecting method for hydrocarbon search using the induced-polarization effect: Geophysics, 71, 179-189.

[3]: Fan, Y., R. Snieder, E. Slob, J. Hunziker, and J. Singer, 2011, Steering and focusing diffusive fields using synthetic aperture: EPL

[4]: Komarov, V., 1980, Geoelectric prospecting using the induced polarization method: Nedra, 390.

[5]: Kulikov, A. V., and Y. A. Shemyakin, 1978, Geoelectric prospecting using the phase method of induced polarization; Nedra, 160. (Moscow).

[6]: Legeido, P., M. M. Mandelybaum, I. Pesterev, and E. Ageenkov, 2006, Electromagnetic sounding method using a transient field spatial derivation on several separations: European Patent Application EP 1 876 473 A1.

[7]: Nazarenko, O., 1961, Device for offshore (marine) electro-surveying: Inventions Bulletin (Sov., Nr. 18, 1962), 150184, 751834 / 26-10.

[8]: Perez-Perez, A., L. Onofrio, M. Bosch, and E. Zapata, 2011, Association between magnetic susceptibilities and hydrocarbon deposits in barinas-apure basin, Venezuela: Geophys., 76, p. 35-41.

[9]: Schlumberger, C., 1920, Etude sur la prospection electrique du sous-sol: Gauthier-Villars.

## Claims

1. A method of measuring and analyzing measurement data from an electromagnetic survey of a geological target area that potentially contains a hydrocarbon reservoir,
   the method comprising the step of

   A) measuring a measurement vector $\boldsymbol{u}$ between receiver electrodes, said measurement vector $\boldsymbol{u}$ comprising a plurality of measurement signals $u_i$, wherein
   at least one of the plurality of measurement *signals* $u_i$ is dependent on a geological characteristic $m_k$ at an geological parameter index $k$, where said geological characteristic $m_k$ provides information about the geological structure of the geological target area,
   **characterized in that** the method further comprises the following steps:
   B) calculating a transformed vector $v$ as a function of the measurement vector $\boldsymbol{u}$, where said transformed vector $v$ is designed to optimize the sensitivity to changes in the geological characteristic $m_k$ and
   C) performing, for each time $t$, at least one of
   minimizing uncertainty $\delta v(k,t)$ of the transformed vector $v$ with respect to the geological characteristic $m_k$, where said uncertainty $\delta v(k,t)$ comprises a non-systematic uncertainty $\delta v'(k,t)$ and a systematic uncertainty $\Delta_{wd} v(k,t)$,
   maximizing a target response $\partial v(k,t)/\partial m_k$ of the transformed vector $v$ with respect to the geological characteristic $m_k$ and
   minimizing a ratio $\psi(k,t)$ between at least the square of the non-systematic uncertainty $<\delta v'(k,t)^2>$ of the transformed vector $v$ and the square of the target response $(\partial v(k,t)/\partial m_k)^2$ of the transformed vector $v$ with respect to the geological characteristic $m_k$.

2. The method in accordance with claim 1, **characterized in that** minimizing the uncertainty $\delta v(k,t)$ of the transformed vector $v$ with respect to the geological characteristic $m_k$ is performed using an equation defined as

$$\langle \delta v(k,t) \rangle = \sqrt{(\langle \delta v'(k,t)^2 \rangle + (\Delta_{wd} v(k,t))^2} =$$
$$\sqrt{\frac{1}{N_B} \sum_{i=1}^{N_B} \left( v^i(k,t) - \bar{v}(k,t) \right)^2 + \left( v(k, h + \Delta h, t) - v(k, h, t) \right)^2} \quad (29)$$

where

$N_B$ is the number of spatial bins along a measurement line, which spatial bin size corresponds to the geological scale of interest,
$i$ is an integer number indexing each spatial bin,
$v^i(k,t)$ is the value of the transformed vector v at spatial bin *i, index k* and *time t,*
$v(k,t)$ is an average over a local spatial domain of the response at *index k* and time *t*,
$h$ is a parameter that generates a systematic error in the transformed vector $\boldsymbol{v},$ and

$v(k,h,t)$ and $v(k,h+\Delta h,t)$ are calculated components of the transformed vector $v$ for the systematic errors *h* and $h + \Delta h$, respectively, at a geological parameter *index k* and a time *t*.

3. The method in accordance with claim 1 or 2, **characterized in that** maximizing the target response $\partial v(k,t)/\partial m_k$ of the transformed vector $v$ with respect to the geological characteristic $m_k$ is performed using an equation defined as

$$\frac{\partial v(k,t)}{\partial m_k} \approx \frac{v(k,m_k+\Delta m_k,t) - v(k,m_k,t)}{\Delta m_k} \quad (30)$$

where

- $\Delta m_k$ is an increment of the geological characteristic $m_k$ and
- $v(k,m_k,t)$ and $v(k, m_k + \Delta m_k,t)$ are calculated components of the transformed vector $v$ for the geological characteristics $m_k$ and $m_k + \Delta m_k$, respectively, at a given geological parameter *index k* and a time *t*.

4. The method in accordance with any one of the preceding claims, **characterized in that** each component $v(k,t)$ of the transformed vector $v$ at a geological parameter *index k* and a time *t* is calculated by projecting the measurement vector $\boldsymbol{u}$ in the direction given by a unit vector $e(k,t)$, said unit vector $\boldsymbol{e}(k,t)$ being governed by the geological characteristic $m_k$.

5. The method in accordance with any one of the preceding claims, **characterized in that** step C is carried out for a plurality of $k$ values corresponding to a plurality of geological characteristics $\{m_k\}$, thereby enabling a subsequent identification of at least one direction of the transformed vector $v$ that optimize sensitivity for a corresponding geological characteristic $m_k$.

6. The method in accordance with claim 5, **characterized in that** the method further comprises the step of minimizing an objective function defined as

$$\phi = \sum_{k=1}^{N''} \left( \sum_t \frac{\left(v^d(k,t) - v^m(k,t)\right)^2}{(\delta v(k,t))^2} \right) \quad (31)$$

where

- $N''$ is the total number of geological characteristics $\{m_k\}$ corresponding to said plurality of $k$ values,
- $v^d(k,t)$ is a value of the transformed vector $v$ corresponding to the measurement signal $u_i$ at geological parameter *index k* and *time t*,
- $v^m(k,t)$ is a calculated value of the transformed vector $v$ based on a geological characteristic $m_k$ corresponding to a predetermined model.

7. The method in accordance with any one of the preceding claims, **characterized in that** the method further comprises the step of measuring locations of said receiver electrodes.

8. The method in accordance with claim 7, **characterized in that** the step A and the step of measuring locations of said receiver electrodes are performed simultaneously, or near simultaneously.

9. The method in accordance with any one of the preceding claims, **characterized in that** at least one of measurement signals $u_i$ is a potential difference.

10. The method in accordance with any one of the preceding claims, **characterized in that** the geological characteristic $m_k$ is a geo-electric characteristic.

11. An apparatus for measuring and analyzing electromagnetic data over a geological target area that potentially contains a hydrocarbon reservoir, **characterized in that** the apparatus comprises at least two receiver electrodes suitable for recording measurement signals $u_i$ from the geological target area and a computer program product stored on a computer usable medium comprising computer readable program means to control an execution of the method in accordance with any one of claims 1-10.

12. The apparatus in accordance with claim 11, **characterized in that** the apparatus further comprises a towing system comprising a plurality of towing cables, where at least one towing cable comprises said at least two receiver electrodes and at least one towing cable comprises a plurality of transmitter (TX) electrodes, the transmitter (TX) electrodes being configured to broadcast electromagnetic signals to the geological target.

13. The apparatus in accordance with claim 12, **characterized in that** the plurality of transmitter (TX) electrodes are configured to broadcast electromagnetic signals in form of a plurality of current pulses with finite durations, and the at least one receiver electrode pair is configured to record the measurement signals $u_i$ at points in time between the transmitted plurality of current pulses.

14. The apparatus in accordance with claim 12 or 13, **characterized in that** least one of

   - the position of the plurality of transmitter (TX) electrodes and
   - the transmitted current pulses from the plurality of transmitter (TX) electrodes

   is, by use of the computer program product, adjusted iteratively during the recording of the measurement signals $u_i$ in order to optimize sensitivity to at least one geological characteristic $m_k$ of a given geological target.

15. The apparatus in accordance with claim 11, **characterized in that** the at least two receiver electrodes are arranged on a buoyant object.

FIG. 1

| Sea | $\rho_1$ |
|---|---|
| Layer 2 | $\rho_2 \eta_2$ |
| Layer 3 | $\rho_3 \eta_3$ |
| Layer 4 | $\rho_4 \eta_4$ |
| Layer 5 | $\rho_5 \eta_5$ |

.
.
.

# FIG. 2

FIG. 3a

FIG. 3b

Europäisches
Patentamt

European
Patent Office

Office européen
des brevets

# EUROPEAN SEARCH REPORT

Application Number

EP 15 18 9977

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ADRIÁN FLORES OROZCO ET AL: "Data error quantification in spectral induced polarization imaging", GEOPHYSICS, SOCIETY OF EXPLORATION GEOPHYSICISTS, US, vol. 77, no. 3, 1 May 2012 (2012-05-01), pages E227-E237, XP001575499, ISSN: 0016-8033, DOI: 10.1190/GEO2010-0194.1 [retrieved on 2012-04-27] * page E227, right-hand column, paragraph 2 * * page E228, left-hand column, paragraph 4 - right-hand column, paragraph 3 * * page E235, left-hand column, paragraph 3 - page E236, left-hand column, paragraph 1 * ----- | 1-15 | INV. G01V3/08 |
| A | VEEKEN P C H ET AL: "Benefits of the induced polarization geoelectric method to hydrocarbon exploration", GEOPHYSICS, SOCIETY OF EXPLORATION GEOPHYSICISTS, US, vol. 74, no. 2, 1 March 2009 (2009-03-01), pages B47-B59, XP001520848, ISSN: 0016-8033, DOI: 10.1190/1.3076607 * page 539, right-hand column, paragraph 6 - page 540, left-hand column, paragraph 5 * ----- -/-- | 1-15 | TECHNICAL FIELDS SEARCHED (IPC) G01V G01N |

The present search report has been drawn up for all claims

| Place of search | Date of completion of the search | Examiner |
|---|---|---|
| The Hague | 22 April 2016 | Baranski, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 18 9977

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LABRECQUE D J ET AL: "THE EFFECTS OF NOISE ON OCCAM'S INVERSION OF RESISTIVITY TOMOGRAPHYDATA", GEOPHYSICS, SOCIETY OF EXPLORATION GEOPHYSICISTS, US, vol. 61, no. 2, 1 March 1996 (1996-03-01), pages 538-548, XP000597448, ISSN: 0016-8033, DOI: 10.1190/1.1443980 * page B53, left-hand column, paragraph 1 - page B54, left-hand column, paragraph 2 * * figure 9 * | 1-15 | |
| A | US 2003/040882 A1 (SHEARD STUART NICHOLAS [AU] ET AL) 27 February 2003 (2003-02-27) * paragraph [0167] * | 1-15 | |
| A | US 2012/191352 A1 (KJERSTAD JOSTEIN KAARE [NO] ET AL) 26 July 2012 (2012-07-26) * paragraph [0052] - paragraph [0054] * | 1-15 | |
| A | US 2014/266216 A1 (LINDQVIST ULF PETER [SE] ET AL) 18 September 2014 (2014-09-18) * paragraph [0020] * | 1-15 | TECHNICAL FIELDS SEARCHED (IPC) |

The present search report has been drawn up for all claims

| Place of search | Date of completion of the search | Examiner |
|---|---|---|
| The Hague | 22 April 2016 | Baranski, Jörg |

EPO FORM 1503 03.82 (P04C01)

## ANNEX TO THE EUROPEAN SEARCH REPORT
## ON EUROPEAN PATENT APPLICATION NO.

EP 15 18 9977

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2016

| Patent document cited in search report | | Publication date | Patent family member(s) | | Publication date |
|---|---|---|---|---|---|
| US 2003040882 | A1 | 27-02-2003 | AR<br>MX<br>US | 036281 A1<br>PA02008257 A<br>2003040882 A1 | 25-08-2004<br>24-04-2006<br>27-02-2003 |
| US 2012191352 | A1 | 26-07-2012 | AU<br>CN<br>EP<br>NO<br>US<br>WO | 2010271595 A1<br>102483466 A<br>2454616 A1<br>331381 B1<br>2012191352 A1<br>2011008106 A1 | 08-03-2012<br>30-05-2012<br>23-05-2012<br>12-12-2011<br>26-07-2012<br>20-01-2011 |
| US 2014266216 | A1 | 18-09-2014 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1876473 A1

**Non-patent literature cited in the description**

- **COLE, K. ; R. COLE.** Dispersion and absorption in dielectrics. *J. Chem. Phys.,* 1941, vol. 9, 341-351
- **DAVYDYCHEVA, S. ; S. N. RYKHLINKSKI ; P. LEGEYDO.** Electrical prospecting method for hydrocarbon search using the induced-polarization effect. *Geophysics,* 2006, vol. 71, 179-189
- **FAN, Y. ; R. SNIEDER ; E. SLOB ; J. HUNZIKER ; J. SINGER.** Steering and focusing diffusive fields using synthetic aperture. *EPL,* 2011
- **KOMAROV, V.** Geoelectric prospecting using the induced polarization method. *Nedra,* 1980, 390
- **KULIKOV, A. V. ; Y. A. SHEMYAKIN.** Geoelectric prospecting using the phase method of induced polarization. *Nedra,* 1978, 160
- **LEGEIDO, P. ; M. M. MANDELYBAUM ; I. PESTEREV ; E. AGEENKOV.** *Electromagnetic sounding method using a transient field spatial derivation on several separations,* 2006
- **NAZARENKO, O.** Device for offshore (marine) electro-surveying. *Inventions Bulletin,* 1961, (18
- **PEREZ-PEREZ, A. ; L. ONOFRIO ; M. BOSCH ; E. ZAPATA.** Association between magnetic susceptibilities and hydrocarbon deposits in barinas-apure basin. *Geophys.,* 2011, vol. 76, 35-41
- **SCHLUMBERGER, C.** Etude sur la prospection electrique du sous-sol. *Gauthier-Villars,* 1920